# EUROPEAN PATENT SPECIFICATION

(11) **EP 2 914 671 B1**
(45) Date of publication and mention of the grant of the patent: **05.04.2017**
(21) Application number: 13818464.3
(22) Date of filing: 31.10.2013
(51) Int. Cl.: C09D 129/04, C08K 3/36, C08K 5/06, C08J 5/18, C09D 5/20, C08L 71/02

(54) **WATER-SOLUBLE COATING FOR PROVISIONALLY COVERING AND PROTECTING SURFACES**
WASSERLÖSLICHE BESCHICHTUNG ZUM PROVISORISCHEN ABDECKEN UND SCHÜTZEN VON OBERFLÄCHEN
REVÊTEMENT HYDROSOLUBLE POUR LE RECOUVREMENT ET LA PROTECTION PROVISOIRES DE SURFACES

(30) Priority: 31.10.2012 IT RM20120525
(43) Date of publication of application: 09.09.2015
(73) Proprietor: Cortecci, Francesco, 00123 Roma (IT)
(72) Inventor: GIANFREDA, Bruno, I-00166 Roma (IT)
(74) Representative: Santi, Filippo
(86) International application number: PCT/IT2013/000301
(87) International publication number: WO 2014/068605

(56) References cited:
- WO-A1-2011/017090
- WO-A2-01/60927
- WO-A2-2005/123270
- WO-A2-2008/157670
- DE-U1- 29 903 267

## Description

The present invention relates to a water-soluble coating for provisionally covering and protecting surfaces.

More specifically, the invention relates to a coating of the above kind, designed to cover the surfaces that need to be preserved from possible damage for the time necessary to perform or terminate the construction or renovation of a building or part of it.

As is well known, at present the protection of sills, floors, sanitation fixtures and other artifacts or, more generally, other surfaces to be preserved after their installation during construction or renovation of buildings provides for a treatment of coverage involving the use of an amalgam comprising plaster, sawdust, paper or paperboard, which is applied with traditional methods and that at the end of work is removed, or with the use of sheets of PVC fixed to the ground with adhesive tape or still with wrapping paper.

All these solutions have, beyond the usual and customary practice constituting a safety for the operators since they are well-known, drawbacks that make their use not ideal.

In fact, it appears evident that, for example, to protect floors, majolica, sanitation fixtures, sills, the use of an extemporary amalgam of variable composition, moreover made with raw materials that do not tend to bind, constitutes in itself a non-optimized solution as well as significally dirty.

Furthermore, said amalgam does not guarantee an effective resistance to the passage, scratch, or other factors which affect its durability over time.

Moreover, removal of amalgam at the end of this work involves considerable difficulties.

Additionally, as far as the adhesive tape deputed to stop the sheets to the ground is concerned, the main limitation of this solution consists in the fact that, over time, and in particular under the influence of solar radiation, the tape hardens and loses its sealing characteristics in some parts and it becomes difficult to remove in other parts.

This requires frequent and ongoing remedial measures, in the absence of which surfaces would be considerably damaged because of abrasion in particular but not only due to passage, break, scratch.

From the point of view of costs and time required for completion of the work, these operations affect greatly the total cost of the works, moreover, without any security of success.

In this context, in recent years, housing has undergone a technical evolution, due in particular to the development of discoveries of "applied chemistry".

In particular, in the field of consolidations, the use of resins, in particular epossidic based resins, now allows multiple applications such as the grouting of pins in reinforced concrete and the enlargement of pillars. The use of resins also allows for the creation of self-leveling screeds, modified cements, delayed for a variety of applications. Other resins give life to pointed, fiber-reinforced mortars, and mortars with additives for recovery.

As a result, in particular in new buildings, it is developing a new interest towards new solutions in the direstion of simplification and that additionally bring cost saving and quality of work.

In parallel, in the production of automobiles, WO2005/123270 describes a masking material that can be used to protect an underlying surface (in particular the surface of a car) during an operation of coating (painting).

In one embodiment, the masking material comprises a thickener, a pH control agent and water. The masking material can be applied to a surface that must be protected during painting or other coating processes, allowed to dry, and then the surface can be coated (eg with paint). After the drying of the paint (or other coating), the masking material can be easily removed by washing with water.

The solution described in WO2005/123270 has the limit that it does not adequately protect the coated surface from possible mechanical damage that may occur during works, such as scratches or abrasions as a result of accidental contact with some parts of the coating device. For this reason, the masking material described in WO2005/123270 is not suitable for use in the construction field, in particular in all the cases in which the surfaces on which the coating is applied should be protected from repeated trampling of the workers and even by rubbing of heavy objects.

In the light of the above, it appears evident the need to have coatings apted to preserve the materials and surfaces that require it against possible damage arising in the course of construction or renovation of a building or part of it, the application or which does not affect the time of completion of work, and even the cost, at the same time ensuring effectiveness of the final effect, namely the resistance to prolonged trampling, and that at the same time can be removed with ease.

In this context it is proposed the solution according to the present invention, which aims at providing a water-soluble coating for provisionally covering and protecting surfaces of polymeric nature with water base, easy to be applied and air-drying, which ensures a certain elasticity, high mechanical and chemical resistance, transparency, possibility to be painted over, and that is not the cause of any emissions and is not restricted in use in enclosed spaces, does not contain any toxic or dangerous element for the user, and that after use can be easily removed by peeling and does not cause residues harmful to the environment, but can be disposed of as any normal plastic waste.

It is therefore a purpose of the present invention to provide a coating that allows to overcome the limits of the solutions according to the prior art and to obtain the technical results previously described.

Further object of the invention is that said coating can be achieved with substantially limited costs, both as far as production costs and management costs is concerned.

Another object of the invention is to provide a coating that is substantially simple, safe and reliable.

It is therefore a specific object of the present invention a water-soluble coating for provisionally covering and protecting surfaces consisting of 12-20% of polyvinyl alcohol, 73-79% of water, 0,5-3% of glycol ether, 0,5-3% of an organic non-migrant plasticizer, from 0, 05 to 3% of a thixotropic agent, 0-1% of a defoamer, 0-1% of a preservative, 0-0,2% of a dye, all percentages being expressed by weight.

Preferably, according to the invention, said glycol ether is selected from dipropylene glycol methyl ether, propylene glycol propyl ether, dipropylene glycol propyl ether, propylene glycol butyl ether, ethylene glycol phenyl ether, propylene glycol monomethyl ether and most preferably propylene glycol monomethyl ether; said organic non-migrant plasticizer is polyethylene glycol and more preferably PEG 400; said thixotropic agent is pyrogenic silica, said defoamer is modified polysiloxane; said preservative is a bactericidal formaldehyde donor preservative and said dye is CI 133.

Moreover, the most preferred object of the present invention is a water-soluble coating for provisionally covering and protecting surfaces that has the following composition:

| | |
|---|---|
| polyvinyl alcohol | 16,5% |
| polyethylene glycol 400 | 2,0% |
| propylene glycol monomethyl ether | 1,5% |
| silicon dioxide | 1,0% |
| polysiloxane defoamer | 0,1% |
| anti-mold formaldehyde donor | 0,1% |
| dye (CI 133) in 1% solution | 0,1% |
| water | q.s. |

According to the invention, said coating has a thickness of at least 1mm and less than 10mm, preferably of at least 4mm and less than 6mm.

Also is a second specific object of the present invention a process for the application of the previously defined coating, in which a quantity of the product is spread evenly on the surface to protect alternately by brush, roller or by pouring it directly on the surface and left to dry.

It is a third specific object of the present invention a process for the removal of the coating previously defined, wherein said coating is lifted by a flap and removed by peeling and/or is removed by washing with water.

Finally, it is a fourth specific object of the present invention the use of the coating defined above for the cover and the provisional protection of surfaces subject to foot traffic.

It is evident the effectiveness of the water-soluble coating for provisionally covering and protecting surfaces of the present invention, which is easy to apply, with little or no toxicity to the operator and the environment, low cost and easy to remove, i.e. which allows to pursue the goals in a simple manner, ensuring effective protection of surfaces and absolute safety for the operators.

The invention will be described below for illustrative, purposes with particular reference to certain illustrative examples and technical considerations that led to its definition.

The film-forming characteristics of the solutions of polyvinyl alcohol (also indicated with the abbreviation PVA) are well known to the skilledin the art. Indeed, PVA is a polymer which, once dispersed in water, has high values of surface tension, which allow a rapid and uniform wetting of the surfaces on which it is applied, as well as an effective penetration that fixes it firmly in the form of film but that, just as easily, can be removed by peeling. These characteristics of the PVA are due to the steric conformation of the molecule, which stretches easily arranging the chains of carbon atoms in the planar position.

For the purposes of the present invention, starting from the above considerations, it was necessary to sort amongst the different types of PVA available on the market, in particular, to select those that presented values of low toxicity, low environmental impact and low risk of fire and outbreak.

In particular, then, for the experimental phase it was chosen, for examplificative, but not limitative purposes of the present invention, a special series of polyvinyl alcohol powder (the 523 series produced by Sekisui), which has the main feature to be totally hydrolyzed, which makes this component of the formulation more easily soluble in water even at room temperature and without the operations of "cooking", thus facilitating the subsequent operations of production according to the present invention. A further characteristic of this component of the formulation is also the high average viscosity compared to other degrees as well as ease of control, having a Newtonian behavior.

The search for the right degree of viscosity of the solution is dictated by the need to simultaneously have the right degree of wetting of the surface and subsequent penetration with permanent adhesion, while ensuring ease of removal for peeling.

In order to meet all the requirements sought and needed to ensure a truly innovative product, this component has been added with some modifiers, in order to achieve various desired performance.

In the course of testing various aqueous solutions were tested at different percentages of dry, all with a pH varying between 4 and 6, in order to ensure broad compatibility with the different types of necessary modifiers.

A further peculiar aspect of the chosen PVA is a low value of volatility, preferably a VOC value not exceeding 1%, to ensure that the final product has low emissions.

Starting from these characteristics, solubilization and viscosity control tests were then performed at various percentages of PVA in water, with the aim of identifying a fluid solution, easy stringing on the stone support, but which nonetheless retained a viscosity such as to ensure the stay without sagging.

At the end of this experimental activity a preferred range of composition of PVA in water was identified and, within this interval, a single most preferred value according to the final use for which the formulation may be designed. The lower limit of this interval is equal to 12% by weight of PVA in water, in correspondence with this value obtaining a fluid, transparent, easy stringing solution. The upper limit of this interval is equal to 18% by weight of PVA in water, in correspondence with this value obtaining a solution of gelled appearance, still sliding, highly viscose.

The right compromise between the two extremes of composition is obtained for values of PVA in water of 16,5% by weight.

The formulation within the range adopted presents obvious advantages: ease to apply, non-toxic, transparency, with the possibility of obtaining a uniform film that can be easily removed by peeling.

In the absence of appropriate modifiers, however, the formulation also has obvious limitations: slow drying, low elasticity, low mechanical strength, sag on vertical surfaces.

To overcome these limitations the various limiting aspects have been examined, with the following considerations.

To overcome the problem of the slow drying, it was necessary to add to the water, the vehicle of PVA, an adjuvant accelerating its evaporation. The known products for such purposes, however, have proved inadequate because they contained limitations that did not meet the needs of the requested product. Amongst these, ethyl alcohol (which realizes an azeotrope with water) has the disadvantage of considerably increasing the degree of toxicity of the vapors resulting in drying. In addition, the solution modified with this additive showed high possibility of flammability.

An excellent response to the specific set is instead offered by the family of glycol ethers. Almost all members of this family, in fact, are water soluble, have high molecular weight, and therefore are well compatible with the chemical nature of the PVA; although they tend to depress the viscosity of the final formulation, and additionally are also surfactants by their nature.

In particular, propylene glycol monomethyl ether, hereinafter also referred to as PM solvent, is easily dispersed in water, is a solvent for the polyvinyl alcohol, is the most rapid in evaporation in a mixture with water and has a low degree of toxicity.

After having selected this component, the tests of solubilization of PVA were then performed again, this time in mixtures with varying percentages of PM solvent in water. In particular, the following formulations were adopted: with ratio water:PM solvent equal to 15:1 (in formula with PM solvent = 0,5%), with a ratio of water:PM solvent equal to 19:1 (in formula with PM solvent = 1,5%) and with a ratio of water:PM solvent equal to 39:1 (in formula with PM solvent = 3,0%).

For all three solutions, there was a very good solubility of PVA, enhanced evaporation of water, a drop in the value of viscosity (in any case within the limits of acceptability).

While, however, the first and the second solution did not alter the appearance and texture of the resulting film after evaporation of the solvents, the third generated difficulty of formation of the coating and breaking of the same after formation, for which the formulation in which the percentage composition of the PM solvent is equal to 1,5% has been shown to be preferable.

Tests were carried out, however, with other representatives of the class of glycol ethers, in particular: dipropylene glycol methyl ether, propylene glycol propyl ether, dipropylene glycol propyl ether,
propylene glycol butyl ether, ethylene glycol phenyl ether. All these, albeit with slight variations, give the final product acceptable characteristics in line with the requirements of the product.

In contrast, three other members of the family of glycol ethers: propylene glycol diacetate, propylene glycol methyl ether acetate, dipropylene glycol methyl ether acetate, although the products are very similar in characteristics to the first listed, were not able to provide coatings with the required characteristics. In fact, with their use the chemical physical characteristics of the final product, in particular the viscosity of the formulation and the mechanical strength of the coating which is obtained after drying are importantly reduced, which in fact excludes them from the list of usable components.

Another limitation of the formulation that had to be overcome was that of the low elasticity associated with low mechanical strength. In the course of the first and second series of tests was in fact found that the elasticity of the coating that was taking place was very poor; it was noted by the fragility of the coating itself and the tensions that were present upon evaporation (formation of bubbles and subsequent cracking).

It was therefore necessary to modify the elasticity of the coating, adding the formulation with a chemical plasticizer, or with a compound which, interposing between the molecular layers of the polymeric coating, ensured the possibility of stretching and twisting, both in the plane and in the three-dimensional space.

The family of plasticizers includes several elements, the most common of which, however, showed also in this case the limitations that made them of little use for the purposes of the invention. In fact, the so-called migrant plasticizers, although cheaper and easier to use, however, respond to an immediate action but not to permanent actions over time. In fact, by their nature, this type of plasticizers tend to go to the surface, dirtying the same but mainly impoverishing the coating over time and progressively in its thickness.For example, a widely used plasticizer such as glycerin, a polyhydric alcohol of low cost and easy availability, appeared to the tests compatible with the rest of the components adopted, ensured greater flexibility to the coating formed, but tended to go to the surface, leaving the coating dry over time and, once again, fragile.

It was therefore necessary to select a particular subclass of plasticizers, so-called non-migrant plasticizers, among which PEG or polyethylene glycol or polyoxyethylene in particular have proved to be preferable. These are polymers prepared by polymerization of ethylene oxide, of which there are several types, classified according to the average length of the molecules, which considerably vary the physical properties (such as viscosity) and the possibility of practical application. They pass from liquid to solid wax, all readily soluble in water, which combined with other hydrophobic molecules enhance the properties of surface activity.

In order not to vary too much the viscosity of the mixture a liquid product was chosen, of average molecular weight, such that it could align with the polyvinyl alcohol used.

During the tests that led to the final formula the criteria used to make the choices were:
- it is desirable, if possible, to use a liquid product;
- it must be checked for compatibility with the polymer and other modifiers of the formula;
- prioritary it must be verified and enhanced to maximize synergy with the chosen glycol ether/s in order to ensure a high rate of evaporation of water (which function in other cases is entrusted to the use of methyl, ethyl, propyl type alcohol presenting in this case a considerable increase in the degree of toxicity of the vapors at the time of evaporation and higher flammability characteristics).

This last point has obtained its maximum validity through combination of propylene glycol methyl ether/polyethylene glycol 400.

This result was particularly surprising, and shows how, unlike other solutions adopted for similar systems, the absence of alcohols does not affect the activity of the preparation for the purposes for which it was designed.

Formulations were tested based on different types of liquid PEG, in particular PEG 200, 400 and 600, by varying the percentages of release between 0,5 and 3% on the total formulation, the lower percentages being discarded for little or no contribution to the flexing of the coating and the upper ones because they tend to migrate to the surface.

Of each formulation obtained by varying the type of PEG used and its percentage in the mixture, were evaluated the following characteristics: elasticity, shrinkage, mechanical strength, obtaining the following table l (in which the characteristics of elasticity, shrinkage, mechanical resistance are respectively indicated with the letters x, y, z, and in place of the absolute values of the same characteristics their low, medium or high compliance with the requirements necessary for the purposes of the invention was reported).

All tests were performed on the coating after drying and ripening of 36 hours.

The elasticity was evaluated by measuring the percentage elongation of the film under tension and up to rupture.

To evaluate the shrinkage the length was measured of the initial film (length of the support on which it is spread uniformly and in a thin layer), and the length after removal by peeling from the support.

As far as the evaluation of the mechanical resistance is concerned, a brush with rigid horsehair was passed on the surface protected by the film with 10 cycles back and forth and the degree of abrasion was assessed, if evident.

**Table 1**

| | PEG 200 | PEG 400 | PEG 600 |
|---|---|---|---|
| 0,5% | Low X | Medium X | Medium X |
| | Low Y | Low Y | Medium Y |
| | | Low Z | Low Z |
| 1,5% | Low X | High X | Medium X |
| | Low Y | High Y | Medium Y |
| | Low Z | Medium Z | Low Z |
| 3,0% | Low X | Medium X | Low X |
| | Low Y | High Y | Medium Y |
| | Low Z | High Z | Low Z |

The interpretation of the results obtained leads to the conclusion that the best formulation, the one that is most useful to use is the one comprising PEG400 at a percentage variable between 1,5 and 3,0%, in this range being enclosed with their maximum value of the three required characteristics (elasticity of the film, low shrinkage, high mechanical strength).

It is however also clear that all three of the PEG used, and in all the percentages between 0,5% and 3,0% allow to obtain an improvement in performance.

Another limit to be answered concerns the leakage on vertical surfaces. In fact, the achievement of the right balance of viscosity, elasticity, strength also does not meet the practical need that the product should and can be applied without leaking on vertical surfaces to be protected.

At first sight, it seems that an increase in the dry formulation or the choice of a kind of less hydrolyzed PVA lead to obtain a good value for this last parameter. But this would lead to the abandonment of performance obtained in the part before.

It was therefore necessary to select an appropriate thixotropic material drawing on the knowledge of the yields of other raw materials used for similar purposes in the formulation of adhesives and paints.

Most preferably, the pyrogenic silica was identified. It is a type of silicon dioxide obtained by spraying at high pressure over a free flame at about 1200 °C, which leads to elongation of the links between the silicon and oxygen atoms. This provides the molecule high values of Van der Waals forces, which are manifested through considerable thixotropic properties of the solutions in which the pyrogenic silica is added.

As is well known, this action does not appear until shear forces (such as tooling, stringing, painting) are applied to the formulation and vice versa it is expressed in all of its value when these forces are not applied, or the formulation is left to itself on the support.

The choice of the percentage values of composition of pyrogenic silica in the formulation must necessarily fall in the range comprised between 0,5% and 3% by weight on the total formulation to which it is added, because above this range "liverings" are present, or sedimentation and viscosity values not compatible with the application of the formulation according to the present invention, while below this range, the effect obtained is bland or zero.

For the purposes of the present invention a proportion of 1% of silica is most preferred, although all the values within the range 0,5-3% ensure results however appreciable and usable.

The choice of the pyrogenic silica as a component of the formulation also affects other aspects of the formulation itself, guaranteeing the formulation characteristics of hydrophobicity, greater mechanical strength, greater resistance to slipping of the foot (in the case of horizontal application).

Additional additives to meet the needs incidental, without interfering with the peculiar characteristics of the formulation.

For example, to avoid the possibility for the formulation of foaming is in the production phase both during stringing (for incorporation of air during the agitation and mixing of the various components, or for incorporation of air caused by the of a brush or a roller during stringing), altering the final appearance or even creating sites of weakness for the coating, it was preferable to an additive mixture a defoamer compatible with water and which do not influence the viscosity or other parameters essential. As you have chosen a preferred antifoam polysiloxane modified.

Similar attention was paid to the preservation in time of the product and its natural tendency to form mold resulting from the intrusion, partially opened and used in the packaging of micro-organisms present in the air (bacteria, yeasts, molds). For this purpose, the formulation was admixed a bactericidal formaldehyde donor to lasting action, soluble and compatible with water-based products as a percentage equal to 0.1% by weight.

Finally, for purposes purely awareness of the product, both before and after application, it is added a food grade dye (CI 133).The function of the dye, then, is not structural, but only for the characterization of the product and of its visibility. By virtue of its colour, in fact, the operator can immediately verify whether the formulation was applied to cover and protect all surfaces that required it, even in low light conditions.

Were also carried out tests of mechanical and chemical resistance of the formulation to various means (aromatic solvents, aliphatic, inorganic bases at high pH, inorganic acids), in all cases experiencing a high resistance and in no event occurring breakage or cracking of the coating after the vesting period.

To conclude the most preferred composition of the water soluble coating coverage and temporary protection of surfaces according to the present invention, as determined in the light of the various tests carried out and that best meets the needs encountered in the use of the product is as follows (all percentages are expressed in weight):

| | |
|---|---|
| polyvinyl alcohol | 16.5% |
| polyethylene glycol 400 | 2.0% |
| propylene glycol monomethyl ether | 1.5% |
| silicon dioxide | 1.0% |
| polysiloxane defoamer | 0.1% |
| anti- mold formaldehyde donor | 0.1% |
| dye (CI 133) in 1% solution | 0.1% |
| water | q.s. |

Table 2 summarizes the lower and upper limits of each of the components of the formulation according to the present invention.

**Table 2**

| COMPONENTS | PERCENT (% by weight) |
|---|---|
| Polyvinyl alcohol | 12-20 |
| Water | 73-79 |
| Solvent PM | 0.5 to 3 |
| PEG 400 | 0.5 to 3 |
| Silicon dioxide | 0.05 to 3 |
| Defoamers | 0.0 to 1 |
| Anti-mold Preservative | 0.0 to 1 |
| Dye | 0.0 to 0.2 |

The percentage change of the components of the water soluble coating coverage and provisional protection surfaces according to the present invention allows to obtain various solutions to the various problems that may arise in a construction site.

It is possible to formulate a liquid product, very fluid, with few characteristics of elasticity and strength, which still provides surface protection for objects which are not subject to pas sage (tiles and sanitary ware not yet implemented), or on the contrary very ispessit or gelificat or , or highly elastic (for floors and marble staircases, precious stones, cooked, subject to mechanical insult).

The choice of the percentages of composition most preferred of the water soluble coating coverage and provisional protection surfaces according to the present invention is therefore triggered by a series of application tests that have suggested that had the characteristics of a compromise which would meet all the requirements mentioned previously.

It is obvious that variations are possible 11a formula tion, always within the purposes of the invention, which do not change the relationship between the essential components and which provide for the addition of auxiliary components in order to solve and ottemperar and certain requirements specifications.

For example, where the product is going the defense of expensive floors under renovation, but having to give attention to the safety of the workers (see in particular the risks of slipperiness of the dried formulation), it is possible to re develops a formula that provides for the release of quartz dust or sand to ensure the arrest to the foot.

Such application variants do not affect the essential characteristics of the invention and therefore do not deviate from the scope of protection defined in the attached claims.

Finally, the application of the water-soluble coating coverage and provisional protection surfaces according to the present invention is particularly simple and involves the following steps:
- Is a portion of the product imm erecting a brush or roller in its container or pour direttame nte on the surface to be protected;
- The product is spread evenly (the product will self level out if it is on a flat surface, in the case of vertical or inclined surfaces, its thixotropy ensures its permanence without sagging).

This ensures absolute a simplicity of application, through the use of simple means and without the need for any special precautions.

The resultant coating after drying (evaporative air) protects any type of material used in construction with a prolonged action,mechanically resisting the actions of ovute to trampling, rubbing, accidental fall of materials and tools; chemically to the touch even with prolonged solvents, paints, glazes, plaster, cement, glues.

This ensures complete protection against wear, no need to retouch or restore.

The removal of the coating is also very easy to get, with the aim being sufficient to lift a small flap of the coating or stess and applying a small force, pull until it comes away. The coating comes off evenly, in a continuous manner, without cracking or tearing. In the more tenacious the product is still removable for easy washing with water (the coating is totally water soluble). This ensures ease and speed of removal.

From the point of view of its composition is a water-based product, with polymers and additives which are not by their nature toxic, do not cause emissions, not pollute the amb ient.

This ensures safety for the operator and for the environment, or no pollution.

## Claims

1. Water-soluble coating for provisionally covering and protecting surfaces consisting of 12-20% of polyvinyl alcohol, 73-79% of water, 0,5-3% of a glycol ether, 0,5-3% of an organic non-migrant plasticizer, from 0,05 to 3% of a thixotropic agent, 0-1% of a defoamer, 0-1% of a preservative, 0-0,2% of a dye, all percentages being expressed by weight.

2. Coating according to claim 1, **characterised in that** said glycol ether is selected from dipropylene glycol methyl ether, propylene glycol propyl ether, dipropylene glycol propyl ether, propylene glycol butyl ether, ethylene glycol phenyl ether, propylene glycol monomethyl ether.

3. Coating according to claim 2, **characterized in that** said glycol ether is propylene glycol monomethyl ether.

4. Coating according to any one of the preceding claims, **characterised in that** said organic non-migrant plasticizer is polyethylene glycol.

5. Coating according to claim 4, **characterised in that** said organic non-migrant plasticizer is PEG 400.

6. Coating according to any one of the preceding claims, **characterised in that** said thixotropic agent is pyrogenic silica.

7. Coating according to any one of the preceding claims, **characterised in that** said defoamer is modified polysiloxane.

8. Coating according to any one of the preceding claims, **characterised in that** said preservative is a bactericidal formaldehyde donor preservative.

9. Coating according to any one of the preceding claims, **characterised in that** said dye is CI 133.

10. Coating according to any one of the preceding claims, **characterised in that** it has the following composition:
| | |
|---|---|
| polyvinyl alcohol | 16,5% |
| polyethylene glycol 400 | 2,0% |
| propylene glycol monomethyl ether | 1,5% |
| silicon dioxide | 1,0% |
| polysiloxane defoamer | 0,1% |
| anti mold formaldehyde donor | 0,1% |
| dye (CI 133) in 1% solution | 0,1% |
| water | q.s. |

11. Coating according to any one of the preceding claims, **characterised in that** it has a thickness of at least 1mm and less than 10mm, preferably of at least 4mm and less than 6mm.

12. Process for the application of the coating defined in any one of claims 1-11, wherein a quantity of the product is spread evenly on the surface to protect alternately by brush, roller or by pouring it directly on the surface and left to dry.

13. Process for the removal of the coating defined in any one of claims 1-10, wherein said coating is lifted by a flap and removed by peeling.

14. Process for the removal of the coating defined in any one of claims 1-10, wherein said coating is removed by washing with water.

15. Use of the coating defined in any one of claims 1-10 for the coverage and temporary protection of surfaces subject to foot traffic.

## Patentansprüche

1. Wasser-lösliche Beschichtung zum provisorischen Abdecken und Schützen von Oberflächen, bestehend aus 12-20% Polyvinylalkohol, 73-79% Wasser, 0,5-3% von einem Glycolether, 0,5-3% von einem organischen, nicht-migrierenden Weichmacher, von 0,05 bis 3% von einem thixotropen Mittel, 0-1% von einem Entschäumer, 0-1% von einem Konservierungsmittel, 0-0,2% von einem Farbstoff, wobei alle Prozentsätze durch das Gewicht ausgedrückt werden.

2. Beschichtung nach Anspruch 1, **dadurch gekennzeichnet, dass** der Glycolether aus Dipropylenglycolmethylether, Propylenglycolpropylether, Dipropylenglycolpropylether, Propylenglycolbutylether, Ethylenglycolphenylether, Propylenglycolmonomethylether ausgewählt ist.

3. Beschichtung nach Anspruch 2, **dadurch gekennzeichnet, dass** der Glycolether Propylenglycolmonomethylether ist.

4. Beschichtung nach einem der vorstehenden Ansprüche, **dadurch gekennzeichnet, dass** der organische, nicht-migrierende Weichmacher Polyethylenglycol ist.

5. Beschichtung nach Anspruch 4, **dadurch gekennzeichnet, dass** der organische, nicht-migrierende Weichmacher PEG 400 ist.

6. Beschichtung nach einem der vorstehenden Ansprüche, **dadurch gekennzeichnet, dass** das thixotrope Mittel pyrogenes Siliziumdioxid ist.

7. Beschichtung nach einem der vorstehenden Ansprüche, **dadurch gekennzeichnet, dass** der Entschäumer modifiziertes Polysiloxan ist.

8. Beschichtung nach einem der vorstehenden Ansprüche, **dadurch gekennzeichnet, dass** das Konservierungsmittel ein bakterizides Formaldehyd-Donor-Konservierungsmittel ist.

9. Beschichtung nach einem der vorstehenden Ansprüche, **dadurch gekennzeichnet, dass** der Farbstoff Cl 133 ist.

10. Beschichtung nach einem der vorstehenden Ansprüche, **dadurch gekennzeichnet, dass** er die nachstehende Zusammensetzung aufweist:
| | |
|---|---|
| Polyvinylalkohol | 16,5% |
| Polyethylenglycol 400 | 2,0% |
| Propylenglycolmonomethylether | 1,5% |
| Siliziumdioxid | 1,0% |
| Polysiloxan-Entschäumer | 0,1% |
| Anti-Moder-Formaldehyd-Donor | 0,1% |
| Farbstoff (Cl 133) in 1% Lösung | 0,1% |
| Wasser | q.s. |

11. Beschichtung nach einem der vorstehenden Ansprüche, **dadurch gekennzeichnet, dass** sie eine Dicke von mindestens 1 mm und weniger als 10 mm, vorzugsweise von mindestens 4 mm und weniger als 6 mm, aufweist.

12. Verfahren zur Auftragung der in einem der Ansprüche 1-11 definierten Beschichtung, wobei eine Menge des Produkts zum Schutz gleichmäßig auf die Oberfläche gesprüht wird, alternativ durch Bürsten, Walzen oder durch Gießen derselben direkt auf die Oberfläche, und trocknen gelassen wird.

13. Verfahren zur Entfernung der Beschichtung, definiert in einem der Ansprüche 1-10, wobei die Beschichtung an einem Eckzipfel angehoben und durch Abziehen entfernt wird.

14. Verfahren zur Entfernung der Beschichtung, definiert in einem der Ansprüche 1-10, wobei die Beschichtung durch Waschen mit Wasser entfernt wird.

15. Verwendung der Beschichtung, definiert in einem der Ansprüche 1-10 für die Bedeckung und den temporären Schutz von Oberflächen, die Fußgängerverkehr ausgesetzt sind.

## Revendications

1. Revêtement soluble dans l'eau pour recouvrir et protéger provisoirement des surfaces constitué de 12 à 20 % d'alcool polyvinylique, 73 à 79 % d'eau, 0,5 à 3 % d'un éther de glycol, 0,5 à 3 % d'un plastifiant organique non migrant, de 0,05 à 3 % d'un agent thixotrope, 0 à 1 % d'un agent antimousse, 0 à 1 % d'un conservateur, 0 à 0,2 % d'un colorant, tous les pourcentages étant exprimés en poids.

2. Revêtement selon la revendication 1, **caractérisé en ce que** ledit éther de glycol est sélectionné parmi l'éther méthylique de dipropylène glycol, l'éther propylique de propylène glycol, l'éther propylique de dipropylène glycol, l'éther butylique de propylène glycol, l'éther phénylique d'éthylène glycol, l'éther monométhylique de propylène glycol.

3. Revêtement selon la revendication 2, **caractérisé en ce que** ledit éther de glycol est l'éther monométhylique de propylène glycol.

4. Revêtement selon l'une quelconque des revendications précédentes, **caractérisé en ce que** ledit plastifiant organique non migrant est le polyéthylène glycol.

5. Revêtement selon la revendication 4, **caractérisé en ce que** ledit plastifiant organique non migrant est le PEG 400.

6. Revêtement selon l'une quelconque des revendications précédentes, **caractérisé en ce que** ledit agent thixotrope est de la silice pyrogénée.

7. Revêtement selon l'une quelconque des revendications précédentes, **caractérisé en ce que** ledit agent antimousse est du polysiloxane modifié.

8. Revêtement selon l'une quelconque des revendications précédentes, **caractérisé en ce que** ledit conservateur est un conservateur donneur de formaldéhyde bactéricide.

9. Revêtement selon l'une quelconque des revendications précédentes, **caractérisé en ce que** ledit colorant est Cl 133.

10. Revêtement selon l'une quelconque des revendications précédentes, **caractérisé en ce qu'**il a la composition suivante :
| | |
|---|---|
| alcool polyvinylique | 16,5 % |
| polyéthylène glycol 400 | 2,0 % |
| éther monométhylique de polyéthylène glycol | 1,5 % |
| dioxyde de silicium | 1,0 % |
| agent antimousse polysiloxane | 0,1 % |
| donneur de formaldéhyde anti-moisissure | 0,1 % |
| colorant (Cl 133) dans 1 % de solution | 0,1 % |
| eau | q.s |

11. Revêtement selon l'une quelconque des revendications précédentes, **caractérisé en ce qu'**il a une épaisseur d'au moins 1 mm et inférieure à 10 mm, de préférence d'au moins 4 mm et inférieure à 6 mm.

12. Procédé d'application du revêtement défini dans l'une quelconque des revendications 1 à 11, dans lequel une quantité du produit est répartie uniformément sur la surface à protéger de manière alternative par brosse, rouleau ou en la versant directement sur la surface et laissée sécher.

13. Procédé d'élimination du revêtement défini selon l'une quelconque des revendications 1 à 10, dans lequel ledit revêtement est soulevé par un rabat et éliminé par pelage.

14. Procédé d'élimination du revêtement défini dans l'une quelconque des revendications 1 à 10, dans lequel ledit revêtement est éliminé par lavage à l'eau.

15. Utilisation du revêtement défini selon l'une quelconque des revendications 1 à 10 pour la couverture et la protection temporaire de surfaces soumises à la circulation piétonnière.
